# EUROPÄISCHE PATENTANMELDUNG

(11) **EP 2 842 681 A1**
(43) Veröffentlichungstag der Anmeldung: **04.03.2015**
(21) Anmeldenummer: 13182556.4
(22) Anmeldetag: 02.09.2013
(51) Int. Cl.: B23K 1/00, B23K 1/18, B23K 3/06, B23K 35/02

(54) **Verfahren zum Löten von mindestens zwei metallischen Bauteile miteinander unter Verwendung eines Lötringes**

(71) Anmelder: Prükom Prüfgesellschaft für Metall- und Kunststoffteile mbH, 68789 St. Leon-Rot (DE)
(72) Erfinder: Bender, Jürgen, 68789 St. Leon-Rot (DE)
(74) Vertreter: Vonnemann, Gerhard

(57) **Zusammenfassung**

Die Erfindung betrifft ein Lötverfahren, mit dem mindestens zwei metallische Bauteile (2, 3, 4) miteinander verbunden werden, mit den folgenden aufeinanderfolgenden Schritten :

- in einem ersten Schritt wird ein erstes Bauteil (2) bereitgestellt, das in seinem Umfang mindestens eine Bohrung (7, 8) aufweist,
- in einem zweiten Schritt wird mindestens ein weiteres Bauteil (3, 4) zumindest teilweise in die zumindest eine Bohrung (7, ) des ersten Bauteils (2)eingebracht,
- in einem dritten Schritt wird ein Lötring (5, 6) auf eine Verbindungsstelle von dem ersten Bauteil (2) und dem weiteren Bauteil (3, 4) aufgelegt,
- in einem vierten Schritt wird mittels Löten das erste Bauteil (2) mit dem weiteren Bauteil (3, 4) verbunden.

## Beschreibung

Die Erfindung betrifft ein Lötverfahren nach dem Oberbegriff des Patentanspruchs 1.

Mit einem Lötverfahren wird eine metallische Verbindung von zwei metallischen Bauteilen erzeugt. Als Verbindungsmaterial dient ein leicht schmelzbares Metalllot. Um einer Oxidation der Metalloberflächen entgegenzuwirken, wird bereits vor dem Lötvorgang ein Flussmittel aufgetragen. Alternativ kann das Lötverfahren auch ohne Flussmittel durchgeführt werden, was häufig aus Kostengründen bei Großserienanfertigungen der Fall ist. In diesen Fällen wird entweder unter Schutzgas oder unter Vakuum gelötet.

Auf EP 1 061 240 A2 ist ein Verfahren zum Verbinden von Verbindungsabschnitten von mindestens einem Bestandteil einer Abgasanlage für ein Kraftfahrzeug bekannt, wobei jeder Verbindungsabschnitt aus im Wesentlichen metallischem Material mit zwei einander abgewandten Flächen gebildet wird. Die zu verbindenden Verbindungsabschnitte sind derart angeordnet, dass mindestens ein Teil von mindestens einer der beiden Flächen von jedem Verbindungsabschnitt einer der beiden Flächendes bzw. eines anderen Verbindungsabschnitts zugewandt ist, wobei die Verbindungsabschnitte durch Hartlöten mit einem Hartlot miteinander verbunden werden. Das Hartlot und die Verbindungsabschnitte werden dabei auf Temperaturen erhitzt, die niedriger sind als Schmelztemperaturen der die Verbindungsabschnitte bildenden Materialien.

Ferner ist aus CN 101249599 A ein Lötverfahren bekannt, bei dem aus Stahl bestehende Rohre miteinander verbunden werden. Dieses Verfahren wird in eigens dafür vorgesehenen Öfen, die unter Schutzgas stehen, durchgeführt (Ofenlöten). Als Lot wird Kupfer verwendet.

Aufgabe der vorliegenden Erfindung ist es, ein Lötverfahren bereitzustellen, mit dem Bauteile miteinander verbunden werden können, ohne dass ein

Flussmittel verwendet wird oder dass ein äußeres Schutzgas vorgesehen werden muss.

Die Aufgabe wird nach den Merkmalen des Patentanspruchs 1 gelöst.

Die Erfindung betrifft somit ein Lötverfahren, mit dem mindestens zwei metallische Bauteile miteinander verbunden werden. Dieses Verfahren umfasst dabei folgende aufeinanderfolgende Schritte:
- in einem ersten Schritt wird ein erstes Bauteil bereitgestellt, das in seinem Umfang mindestens eine Bohrung aufweist;
- in einem zweiten Schritt wird ein weiteres Bauteil zumindest teilweise in die zumindest eine Bohrung des ersten Bauteils eingebracht;
- in einem dritten Schritt wird ein Lötring auf eine Verbindungsstelle von dem ersten Bauteil und dem weiteren Bauteil aufgelegt;
- in einem vierten Schritt wird mittels Löten das erste Bauteil mit dem weiteren Bauteil verbunden.

Vorzugsweise handelt es sich bei dem ersten Bauteil sowie dem weiteren Bauteil um Stahlrohre. Dabei weist das erste Stahlrohr, d.h. das erste Bauteil, in seinem Umfang mindestens eine Bohrung auf, in die das weitere Stahlrohr zumindest teilweise eingebracht wird. Weist das erste Stahlrohr in seinem Umfang mehrere Bohrungen auf, so kann in jede dieser Bohrungen ein Stahlrohr zumindest teilweise eingebracht werden und mit dem ersten Stahlrohr verbunden werden. Dadurch ist es möglich, ein komplexes Rohrsystem herzustellen.

Bevorzugt wird das erste Bauteil mit den anderen Bauteilen mittels Flammenlöten verbunden. Dazu werden unterschiedliche Brenngas-Sauerstoff-Mischungen benutzt. Weit verbreitet sind Propan-Ansaugluft und Acetylen-Sauerstoff.

Das Flammenlöten (= Brennerlöten) hat den Vorteil, dass es sehr flexibel eingesetzt werden kann.

Vorzugsweise weist der Lötring Kupfer auf. Da Kupfer sehr viel preiswerter als Silber ist, mit dem Stahlrohre ebenfalls verbunden werden können, handelt es sich um ein sehr kostengünstiges Verfahren.

Besonders bevorzugt werden Lötringe aus Bronze, insbesondere CuSn₆, verwendet, weil Bronze sehr günstig zu haben ist. Bronze im Allgemeinen aber gerade CuSn₆ im Besonderen zeichnet sich durch seine ausgezeichneten mechanischen Eigenschaften und seine chemische Beständigkeit aus.

Vorzugsweise strömt durch das zweite Bauteil ein Gas mit reduzierenden Eigenschaften, zum Beispiel Formiergas. Dieses Formiergas weist mindestens 5,5 % Wasserstoff auf. Da der Wasserstoff reduzierende Eigenschaften besitzt, kommt es an der Verbindungsstelle der beiden Bauteile, d.h. an der Lötstelle, an der das erste Bauteil mit dem zweiten Bauteil miteinander verbunden wird, nicht zu einer Oxidation der Metalle. Auf ein äußeres Schutzgas oder gar auf ein Löten in einer Vakuumsanlage, kann verzichtet werden, weil der Wasserstoff durch die Lötstelle hindurch difundiert und so auch an der Außenseite des zweiten Bauteils eine Oxidation der Metalle verhindert.

Ferner betrifft die Erfindung eine Anordnung, vorzugsweise ein Rohrsystem, das nach dem eingangs beschriebenen Lötverfahren hergestellt wird, wobei die Verbindungsstelle (Lötstelle) zwischen den miteinander verbundenen Bauteilen keine oxidierten Bereiche aufweist. Damit wird eine homogene und stabile Verbindung zwischen den Bauteilen erhalten.

Die Erfindung wird im Folgenden anhand von Figuren näher erläutert. Es zeigen:
Figur 1 eine perspektivische Ansicht einer Anordnung;
Figur 2 einen Schnitt A-A durch die in Figur 1 gezeigte Anordnung;
Figur 3 eine weitere Ansicht der in Figur 2 gezeigten Anordnung.

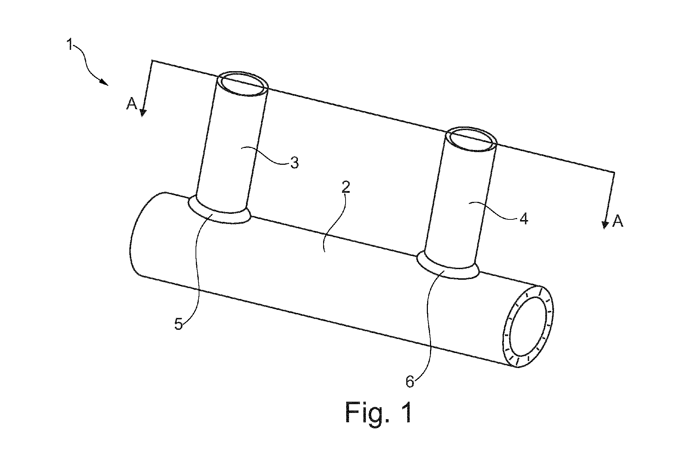

Figur 1 zeigt eine perspektivische Ansicht einer Anordnung 1, die ein erstes Bauteil 2 aufweist, das mit weiteren Bauteilen 3, 4 verbunden ist. Die weiteren Bauteilen 3, 4 werden zumindest teilweise in Bohrungen des ersten Bauteils 2 eingebracht. Die Bohrungen des ersten Bauteils 2 sind jedoch in der Figur 1 nicht zu erkennen, weil Lötringe 5, 6 an Verbindungsstellen zwischen dem ersten Bauteil 2 und dem dritten Bauteil 3 bzw. dem ersten Bauteil 2 und dem vierten Bauteil 4 angeordnet sind. Die Lötringe 5, 6 decken somit die Bohrungen des ersten Bauteils 2 ab. Das erste Bauteil 2 sowie die weiteren Bauteilen 3, 4 sind vorzugsweise als Rohre ausgebildet, die aus Stahl bestehen. Dabei kann es sich bei diesen Rohren auch um Rohre handelt, die mäander-förmig aufgebaut sind. Ist das erste Bauteil als Stahlrohr ausgebildet, so handelt es sich bei diesem ersten Bauteil um ein Sammelrohr oder ein Verteilerrohr.

Die aus Rohren bestehende Anordnung 1 bildet somit ein Rohrsystem. Ist dieses Sammelrohr Teil eines Rohrsystems, beispielsweise eines Rohrsystems eines Kühlsystems, so wird über dieses Sammelrohr, das aus den an diesem Sammelrohr angeordneten Rohren strömende Kühlflüssigkeit gesammelt. Ist das Verteilerrohr Teil eines solchen Rohrsystems, so wird über das Verteilersystem Kühlflüssigkeit verteilt.

Vorzugsweise weisen die Lötringe 5, 6 Kupfer auf, da Kupfer sehr viel preiswerter als Silber ist, mit dem Stahlrohre in der Regel verbunden werden. Besonders bevorzugt werden Lötringe aus Bronze, zum Beispiel aus CuSn₆, verwendet, weil Bronze sehr günstig zu haben ist. Ferner hat Bronze den Vorteil, dass es sehr gute mechanische Eigenschaften besitzt und chemisch beständig ist.

Obwohl in Figur 1 nicht dargestellt, so ist für einen Fachmann klar, dass anstelle von den gezeigten zwei Bauteilen 3, 4 auch mehr als zwei Bauteile oder auch nur ein Bauteil mit dem ersten Bauteil 2 verbunden werden können. Dazu sind in dem ersten Bauteil 2 so viele Bohrungen eingebracht, wie weitere Bauteile mit dem ersten Bauteil 2 verbunden werden sollen.

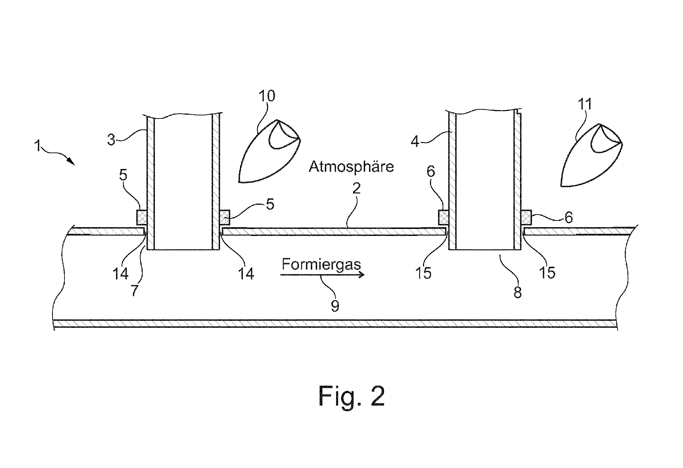

Figur 2 zeigt einen Schnitt A-A durch das in Figur 1 dargestellte Rohrsystem 1 mit dem ersten vorzugsweise als Stahlrohr ausgebildeten Bauteil 2 sowie den beiden zumindest teilweise in das erste Bauteil 2 eingebrachten Bauteilen 3, 4. Um die beiden Bauteile 3, 4, die vorzugsweise ebenfalls als Stahlrohre ausgebildet sind, ist jeweils ein Lötring 5, 6 angeordnet. Dabei deckt der Lötring 5 die Bohrung 7 und der Lötring 6 die Bohrung 8 des ersten Bauteils 2, das heißt des Stahlrohrs 2, ab. Zwischen dem ersten Bauteil 2 und den beiden in die Bohrung 7 bzw. 8 eingebrachten Bauteile 3, 4 ist ein Lötspalt 14 bzw. 15 angeordnet. Der Lötspalt 14 bzw. 15 ist dabei sehr klein und beträgt vorzugsweise weniger als 1,5 mm.

Sollen nun die beiden Bauteile 3, 4 mit dem ersten Bauteil 2 verbunden werden, so muss der jeweilige Lötring 5, 6 durch Erhitzen zum Erweichen gebracht werden, so dass das Material dieser Lötringe 5, 6 in den entsprechenden Lötspalt 14, 15 gelangt. Dabei gelangt das Material insbesondere aufgrund der herrschenden Kapillarkräfte in Lötspalt 14 bzw. 15. Nachdem das erweichte Material in den entsprechenden Lötspalt 14, 15 gelangt ist, lässt man das Material erstarren, so dass eine Lötstelle (nicht gezeigt) gebildet wird, die das Bauteil 3 mit dem Bauteil 2 bzw. das Bauteil 4 mit dem Bauteil 2 verbindet.

Vorzugsweise wird das erste Bauteil 2 mit den anderen Bauteilen 3, 4 mittels Flammenlöten verbunden. Dazu können Brenner mit unterschiedlichen Brenngas-Sauerstoff-Mischungen verwendet werden, zum Beispiel ein Propan-Luft-Gemisch oder ein Acetylen-Sauerstoff-Gemisch. Das Flammenlöten - auch Brennerlöten genannt - hat den Vorteil, dass es sehr flexibel einsetzbar ist, weil diese Brenner leicht von Bedienpersonal zu einem anderen Einsatzort transportiert werden können. In Figur 2 sind dabei Flammen eines solchen Brenners schematisch dargestellt und mit den Bezugszahlen 10 bzw. 11 gekennzeichnet.

Damit es nicht zu einer Oxidation der Verbindungsstellen zwischen dem ersten Bauteil 2 und dem dritten Bauteil 3 bzw. dem ersten Bauteil 2 und dem vierten Bauteil 4 kommt, strömt durch das erste Bauteil 2 ein Gas mit leichtem Überdruck. Dieses Gas weist reduzierende Eigenschaften auf. Vorzugsweise wird ein Formiergas verwendet, das aus Stickstoff und Wasserstoff besteht, wobei der Anteil an Wasserstoff mindestens 5,5 % beträgt. So kann das Formiergas beispielsweise aus 80 % Stickstoff und 20 % Wasserstoff bestehen. Die Strömungsrichtung des Formiergases in den zweiten Bauteil 2 ist dabei mittels eines Pfeils 9 angedeutet. Während des Lötens gelangt das Formiergas aufgrund des leichten Überdrucks über den Lötsplat 14 bzw. 15 nach außen. Das nach außen strömende Formiergas verhindert dabei aufgrund des Wasserstoffes eine Oxidation des Materials der Lötringe 5, 6, welches in den entsprechenden Lötsplat 14, 15 eindringt.

Auf ein äußeres Schutzgas oder gar auf ein Löten in einer Vakuumanlage, kann verzichtet werden. Das Löten kann somit unter Atmosphäre erfolgen. Auch auf den Einsatz von Flussmitteln kann verzichtet werden.

Es versteht sich, dass anstelle des Formiergases auch andere Gasmischungen verwendet werden können, die einenasanteil enthalten, der reduzierend wirkt und so eine Oxidation der entstehenden metallischen Lötstelle verhindert.

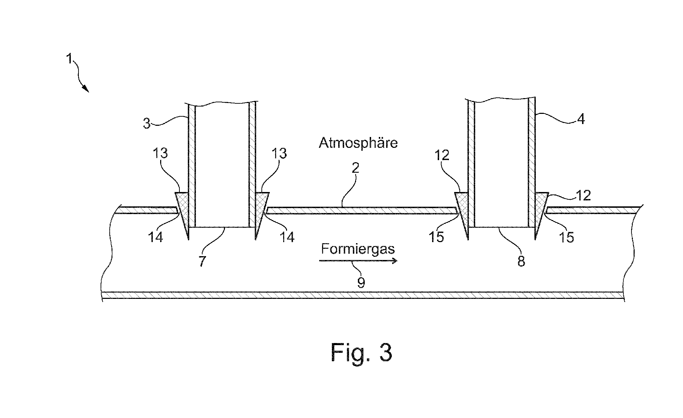

In Figur 3 ist eine weitere Ansicht des in Figur 2 gezeigten Rohrsystems 1 dargestellt. Die beiden Bauteile 3 und 4 sind über jeweils eine Lötstelle 12 bzw. 13 mit dem ersten Bauteil 2 fest verbunden. Die Lötstellen 12, 13, bei denen es sich im Prinzip um die erweichten und wieder erstarren Lötringe handelt, befinden sich dabei in dem entsprechenden Lötspalt 14, 15 und verschließen deshalb die entsprechenden Bohrungen 7 bzw. 8 luftdicht ab, so dass weder Gas noch Flüssigkeit aus dem Rohrsystem 1 entweichen können.

Es versteht sich, dass das erste Bauteil kein Rohr sein muss sondern ohne eine Platte sein kann, die Bohrungen aufweist in die weitere Bauteile eingebracht werden können, um diese mit der Platte zu verbinden.

### Bezugszeichenliste

- 1: Anordnung
- 2: Erstes Bauteil
- 3: Bauteil
- 4: Bauteil
- 5: Lötring
- 6: Lötring
- 7: Bohrung
- 8: Bohrung
- 9: Pfeil
- 10: Flamme eines Brenners
- 11: Flamme eines Brenners
- 12: Lötstelle
- 13: Lötstelle
- 14: Lötspalt
- 15: Lötspalt

## Patentansprüche

1. Lötverfahren, mit dem mindestens zwei metallische Bauteile miteinander verbunden werden, **gekennzeichnet durch** die folgenden aufeinanderfolgenden Schritte:
- in einem ersten Schritt wird ein erstes Bauteil (2) bereitgestellt, das in seinem Umfang mindestens eine Bohrung (7, 8) aufweist;
- in einem zweiten Schritt wird mindestens ein weiteres Bauteil (3, 4) zumindest teilweise in die zumindest eine Bohrung (7, 8) des ersten Bauteils (2) eingebracht;
- in einem dritten Schritt wird ein Lötring (5, 6) auf eine Verbindungsstelle von dem ersten Bauteil (2) und dem weiteren Bauteil (3, 4) aufgelegt;
- in einem vierten Schritt wird mittels Löten das erste Bauteil (2) mit dem weiteren Bauteil (3, 4) verbunden.

2. Lötverfahren nach Patentanspruch 1, **dadurch gekennzeichnet, dass** das erste Bauteil (2) sowie das weitere Bauteil (3, 4) Stahlrohre sind.

3. Lötverfahren nach Patentanspruch 1, **dadurch gekennzeichnet, dass** das erste Bauteil (2) mit dem weiteren Bauteil (3, 4) mittels Flammenlöten verbunden wird.

4. Lötverfahren nach Patentanspruch 1, **dadurch gekennzeichnet, dass** der Lötring (5, 6) Kupfer aufweist.

5. Lötverfahren nach Patentanspruch 4, **dadurch gekennzeichnet, dass** der Lötring (5, 6) aus einer Bronze besteht.

6. Lötverfahren nach Patentanspruch 5, **dadurch gekennzeichnet, dass** der Lötring (5, 6) aus CuSn₆ besteht.

7. Lötverfahren nach Patentanspruch 1, **dadurch gekennzeichnet, dass** durch das erste Bauteil (2) ein Gas mit reduzierenden Eigenschaften strömt.

8. Lötverfahren nach Patentanspruch 7, **dadurch gekennzeichnet, dass** beim vierten Schritt Material des Lötrings (5, 6) erweicht und in einen Lötspalt (14, 15) gelangt, der sich zwischen dem ersten Bauteil (2) und dem weiteren Bauteil (3, 4) befindet, und dass das Gas aus dem Lötspalts (14, 15) entweicht, wobei dieses Gas verhindert, dass das Material des Lötrings (5, 6) während des Lötverfahrens oxidiert.

9. Lötverfahren nach Patentanspruch 7 oder 8, **dadurch gekennzeichnet, dass** das Gas Formiergas ist.

10. Anordnung (1), hergestellt mit dem Lötverfahren nach einem der vorhergehenden Patentansprüche 1 bis 9.

## Geänderte Patentansprüche

### Geänderte Patentansprüche gemäss Regel 137(2) EPÜ.

**1.** Lötverfahren, mit dem mindestens zwei metallische Bauteile miteinander verbunden werden, **gekennzeichnet durch** die folgenden aufeinanderfolgenden Schritte:
- in einem ersten Schritt wird ein erstes Bauteil (2) bereitgestellt, das in seinem Umfang mindestens eine Bohrung (7, 8) aufweist;
- in einem zweiten Schritt wird mindestens ein weiteres Bauteil (3, 4) zumindest teilweise in die zumindest eine Bohrung (7, 8) des ersten Bauteils (2) eingebracht;
- in einem dritten Schritt wird ein Lötring (5, 6) auf eine Verbindungsstelle von dem ersten Bauteil (2) und dem weiteren Bauteil (3, 4) aufgelegt;
- in einem vierten Schritt wird mittels Löten das erste Bauteil (2) mit dem weiteren Bauteil (3, 4) verbunden,
wobei **durch** das erste Bauteil (2) ein Gas mit reduzierenden Eigenschaften strömt und beim vierten Schritt Material des Lötrings (5, 6) erweicht und in einen Lötspalt (14, 15) gelangt, der sich zwischen dem ersten Bauteil (2) und dem weiteren Bauteil (3, 4) befindet, und dass das Gas aus dem Lötspalts (14, 15) entweicht, wobei dieses Gas verhindert, dass das Material des Lötrings (5, 6) während des Lötverfahrens oxidiert.

**2.** Lötverfahren nach Patentanspruch 1, **dadurch gekennzeichnet, dass** das erste Bauteil (2) sowie das weitere Bauteil (3, 4) Stahlrohre sind.

**3.** Lötverfahren nach Patentanspruch 1, **dadurch gekennzeichnet, dass** das erste Bauteil (2) mit dem weiteren Bauteil (3, 4) mittels Flammenlöten verbunden wird.

**4.** Lötverfahren nach Patentanspruch 1, **dadurch gekennzeichnet, dass** der Lötring (5, 6) Kupfer aufweist.

**5.** Lötverfahren nach Patentanspruch 4, **dadurch gekennzeichnet, dass** der Lötring (5, 6) aus einer Bronze besteht.

**6.** Lötverfahren nach Patentanspruch 5, **dadurch gekennzeichnet, dass** der Lötring (5, 6) aus CuSn₆ besteht.

**7.** Lötverfahren nach einem der Patentansprüche 1 bis 6, **dadurch gekennzeichnet, dass** das Gas Formiergas ist.

**8.** Anordnung (1), hergestellt mit dem Lötverfahren nach einem der vorhergehenden Patentansprüche 1 bis 7.
